# EUROPEAN PATENT APPLICATION

(11) **EP 2 711 582 A1**
(43) Date of publication of application: **26.03.2014**
(21) Application number: 13180197.9
(22) Date of filing: 13.08.2013
(51) Int. Cl.: F16D 41/32

(54) **Hub for bicycle wheels**

(30) Priority: 20.09.2012 IT PN20120053
(71) Applicant: Alchemist S.r.l., 33100 Udine (IT)
(72) Inventor: Marcorin, Sandro, 30020 Torre di Mosto (VE) (IT)
(74) Representative: Gonella, Mario

(57) **Abstract**

The present invention refers to a hub for bicycle wheels comprising a freewheel body (102; 202) adapted to be coupled to a central body (3; 203) by means of a coupling device comprising at least one coupling element (105; 205) associated to the freewheel body (102; 202) and engageable with a respective tooth (110; 210) of a crown gear (107; 207) integral with said central body (3; 203); thrust means (106; 206) are provided to maintain the coupling element (105; 205) engaged with said tooth (110; 210). The thrust means (106; 206) consist essentially of a pair of permanent magnets (111, 112; 211; 212) associated, respectively, with the coupling element (105, 205) and the freewheel body (102; 202) and arranged with their like polarities facing each other.

## Description

### TECHNICAL FIELD OF INVENTION

The present invention is relative to a hub for bicycle wheels, in particular a hub for the driving wheel, generally the rear wheel, of bicycles of freewheel type.

### STATE OF THE ART

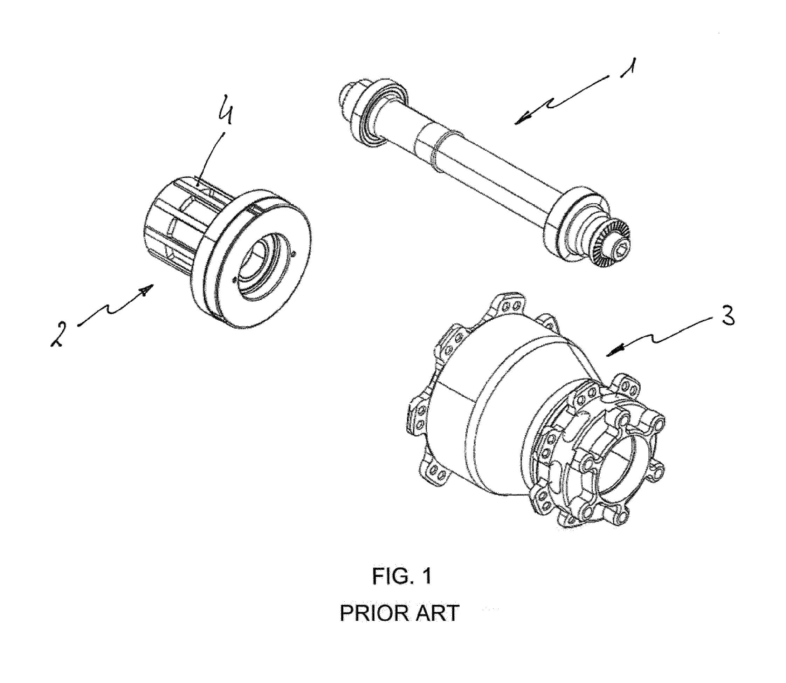

The rear hub of a bicycle is made up essentially of three parts, as shown in fig. 1: a central pin 1 which makes it possible to fasten the rear wheel to the bicycle and defines an axis about which the hub rotates; a freewheel body 2 having the function of transmitting, through known linkwork systems, the rotational motion applied through the pedals to the wheel to allow the free rotation in idle mode of the wheel in the absence of power transmitted through the pedals, and a central body 3 comprising the flanges to which the spokes are connected to transfer the rotation of the hub to the rim of the wheel.

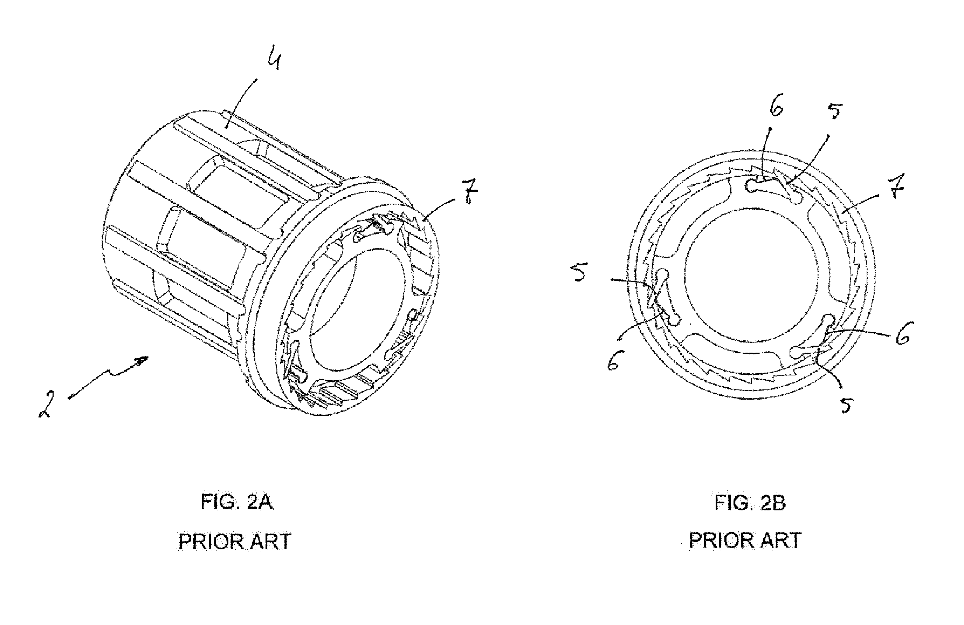

Generally, referring to figures 2A and 2B, the prior art freewheel bodies are made up of an external body 4 on which is mounted the cassette, that is, the set of sprocket wheels that form part of the shift control device, and a coupling system capable of changing the force of the pedal stroke to a movement of rotation of the driving wheel.

The coupling systems are generally made up of coupling elements 5, such as pawls, hinged circumferentially to the freewheel body 2 and swinging in opposition to elastically deformable means 6, such as a flat spring or equivalent means. The elastically deformable means 6 thrust the coupling elements 5 into engagement with a crown gear 7 integral with the central body 3. In figures 2A and 2B, the crown gear 7 is shown associated to the freewheel body 2 in order to better understand the operation of the system. In this manner, a counterclockwise rotation, referring to fig. 2B, applied by the pedals to the freewheel body 2 causes the engagement of the coupling elements 5 with the teeth on the crown gear 7, thereby rotating the central body 3 with which the crown gear 7 forms an integral part. In this manner, the force of the pedal stroke is transferred to the driving wheel of the bicycle. Vice versa, when the pedal stroke is interrupted and thus there is no transfer of power, the freewheel body 2 remains still and the central body 3 can rotate freely in the idle mode because the coupling elements 5 are disengaged from the teeth of the crown gear 7, in opposition to the action of the elastically deformable means 6 due to the effect of the inclined plane configuration of the teeth in the crown gear 7.

The force produced by the transmission of the pedal stroke is thus applied to the coupling elements 5, which are thus subject to a peak axial load that generates on each individual element 5 a high compression force.

A disadvantage found in the prior art coupling systems described above lies in the fact that the optimal operation and duration of the coupling system are closely connected to quality, understood as the characteristics of strength and the capacity of maintaining unchanged through time the elastic characteristics of the type of springs used to provide the elastic opposition to the coupling elements so as to guarantee that they are maintained in contact against the crown gear.

Another disadvantage lies in the necessity of carrying out frequent maintenance of the system to prevent dust or dirt from getting between the springs 6 and the coupling elements 5 and compromise their correct operation.

### SUMMARY OF THE INVENTION

The main objective of the subject matter of the present invention is to provide a hub for bicycle wheels having an improved operation with respect to the prior art solutions.

In the scope of the above objective, one purpose is to provide a hub whose components, in particular the coupling system, have high characteristics of reliability and long life, while requiring less frequent maintenance.

Another purpose of the present invention is to devise a hub capable of offering improved performance characteristics with respect to the existing solutions.

One not less important objective is to devise a hub for bicycle wheels capable of accomplishing the above purpose and objectives at an economically advantageous price and achievable by means of the usual well-known plants, machinery and equipment.

The above purpose and objectives, and others that will become more evident below, are achieved with a hub for bicycle wheels as defined in claim 1.

### BRIEF DESCRIPTION OF THE DRAWINGS

Further characteristics and the advantages obtainable with a hub for bicycle wheels according to the present invention will become more evident from the following description of a particular, but not exclusive, embodiment illustrated purely by way of example without limitations with reference to the following figures:
- figure 1 illustrates, in a perspective exploded view, the components of a hub belonging to the prior art described above;
- figures 2A and 2B are respectively a perspective view and a front elevation of a component of the hub, specifically the freewheel body to which the crown gear is associated, belonging to the prior art illustrated in figure 1;
- figures 3A and 3B illustrate, respectively in a perspective view and a front elevation, a freewheel body provided with a coupling device that is an integral part of a hub according to the present invention.
- figure 4 illustrates, in a perspective exploded view, a second embodiment of a coupling device for a hub according to the present invention;
- figure 4A is a detail of a component of the hub of figure 4;
- figures 5A and 5B illustrate, respectively in a perspective view and a front elevation, a freewheel body provided with the coupling device of figure 4.

### DETAILED DESCRIPTION OF THE INVENTION

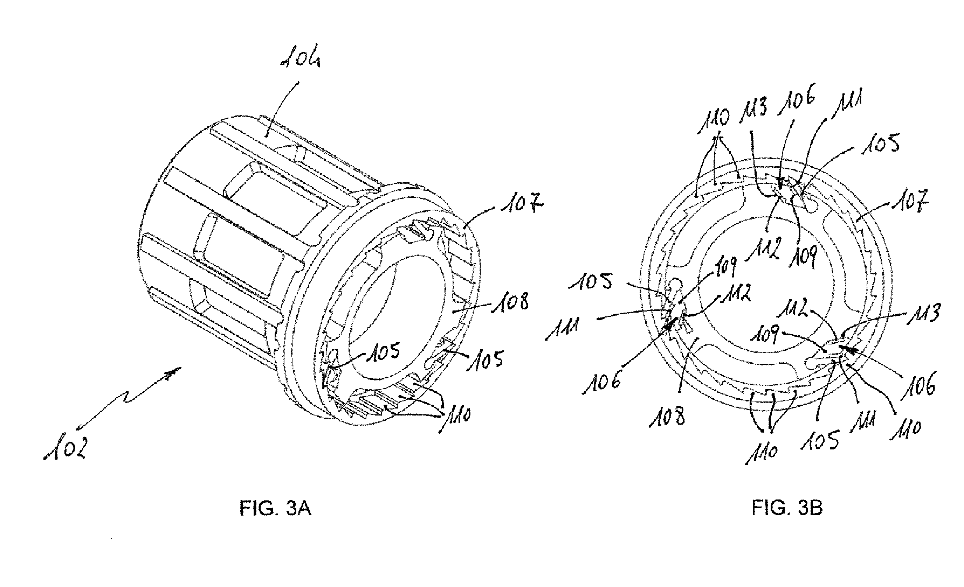

With reference to the previously mentioned figures, a hub for bicycle wheels according to the present invention includes a central pin 1 (fig. 1) that makes it possible to fasten the rear wheel to the bicycle and defines an axis about which the hub rotates, a freewheel body 102 (figures 3A, 3B) that performs the function of transmitting the rotation movement applied by the pedals to the wheel, allowing the free rotation of the latter in idle mode in the absence of power transmitted by the pedals, and a central body 3 (fig. 1) comprising the flanges to which are connected the spokes that make it possible to transfer the rotation of the hub to the rim of the wheel.

The freewheel body 102 consists essentially of an external body 104 on which is engaged the cassette, that is, the set of sprocket wheels forming a part of the shift control device, and of a disk 108 in which are pivoted, within respective and suitable seats 109 formed peripherally on the disk 108, one or more coupling elements 105 that can oscillate with respect to the disk 108 in opposition to thrust means 106.

The function of the thrust means 106 is to push the coupling elements 105 into contact with the teeth of a crown gear 107 integral with the central body 3. In figures 3A and 3B, the crown gear 107 is shown associated with the freewheel body 102 for a better understanding of the operation of the assembly. The teeth 110 of the crown gear 107 have essentially a sawtooth shape to form a portion with an inclined plane configuration. In this manner, a counter-clockwise rotation according to the reference of fig. 3B, exerted by the pedals to the freewheel body 102 brings about the engagement of the coupling elements 105 with a respective tooth 110 of the crown gear 107, thus imparting a rotation to the central body 3 which is integral with the crown gear 107; in this manner, the force of the pedal stroke is transferred to the driving wheel of the bicycle. Vice versa, when the pedal stroke is interrupted and thus there is no transfer of power, the freewheel body 2 remains still and the central body 3 can rotate freely in the idle mode because the coupling elements 105 are disengaged from the teeth of the crown gear 107 due to the effect of the thrust force generated by the inclined plane configuration of the teeth on the crown bear 107, which cause the coupling elements 105 to oscillate with reciprocating motion in opposition to the thrust means 106.

The unit comprising the coupling elements 105, the thrust means 106 and the crown gear 107 thus forms a coupling device capable of transmitting the rotational movement applied by the pedal stroke to the driving wheel, generally the rear wheel, and of allowing the free rotation of said wheel in the direction of travel in the absence of pedal strokes.

According to a characteristic peculiar to the present invention, the thrust means 106 consist of a pair of permanent magnets for each coupling element 105. Each pair of magnets comprises a first magnet 111 associated with the respective coupling element 105 and a second magnet 112 associated with the freewheel body 102 in the seat 109 within which is accommodated said coupling element 105; the first and the second magnet 111, 112 are arranged so that the poles having the same polarity face each other and are spaced from each other when the coupling element 105 is engaged with the respective tooth 110, so as to create a magnetic repulsion between the coupling element 105 and the seat 109 such as to push the coupling element 105 into engagement with the crown gear 107 when power is being transmitted and thus the freewheel body 102 imparts the rotation to the central body 3; conversely, when the freewheel body 102 remains still, during an interruption in the rotation of the pedals, the reciprocating oscillation of the coupling elements 105 acting against the repulsive force exerted by the pair of magnets 111, 112 makes it possible to pass over the teeth 110, allowing the central body 3 to continue to rotate in the idle mode.

To achieve an optimum magnetic repulsion effect, the seat 109 may advantageously be provided with a portion 113 having approximately the same inclination as the respective coupling element 105 when it is in the position of engagement with the crown gear 107; in this manner, the two magnets 111, 112 are turned one against the other and substantially parallel to each other.

From the above, it is thus evident how the present invention achieves the initially foreseen purposes and advantages: in effect, a hub for bicycle wheels has been provided offering an improved operation compared to the solutions of the prior art.

In particular, the use of a magnetic system to provide the thrust force to the coupling elements 105 guarantees a high reliability and duration of the coupling device because the useful life of a magnet is much longer than is the case with elastic systems of mechanical type, such as springs, and in any case longer than the life of the wheel to which the hub is coupled.

Moreover, the use of permanent magnets makes it possible to keep dust or dirt from getting into the coupling device, so that the demands for maintenance are considerably reduced.

Naturally, the present invention is open to many applications, modifications or variants without thereby departing from the scope of patent protection, as defined by the accompanying claim 1.

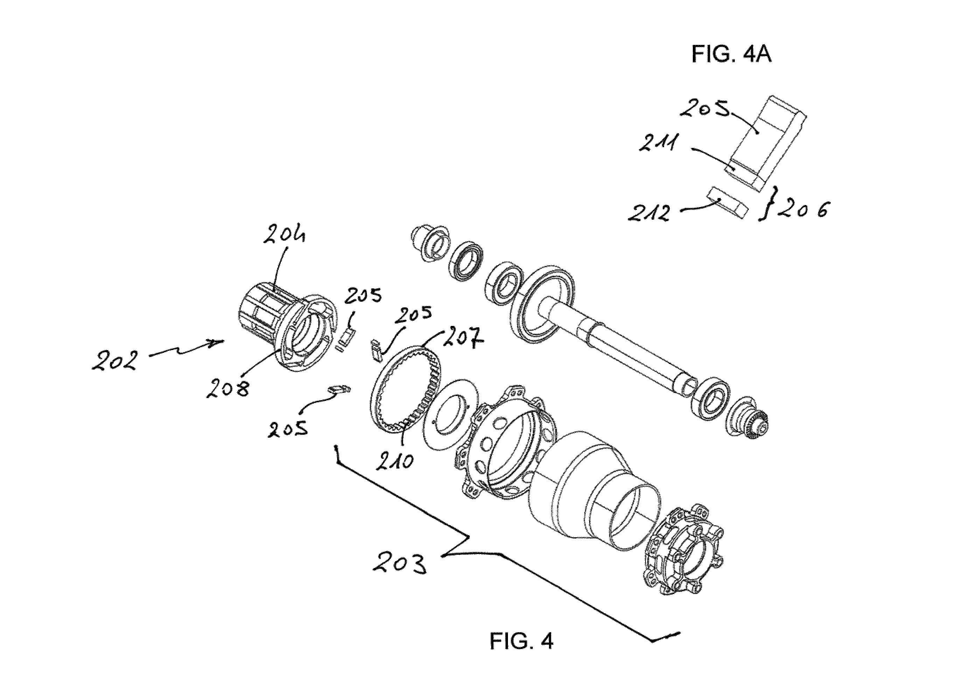

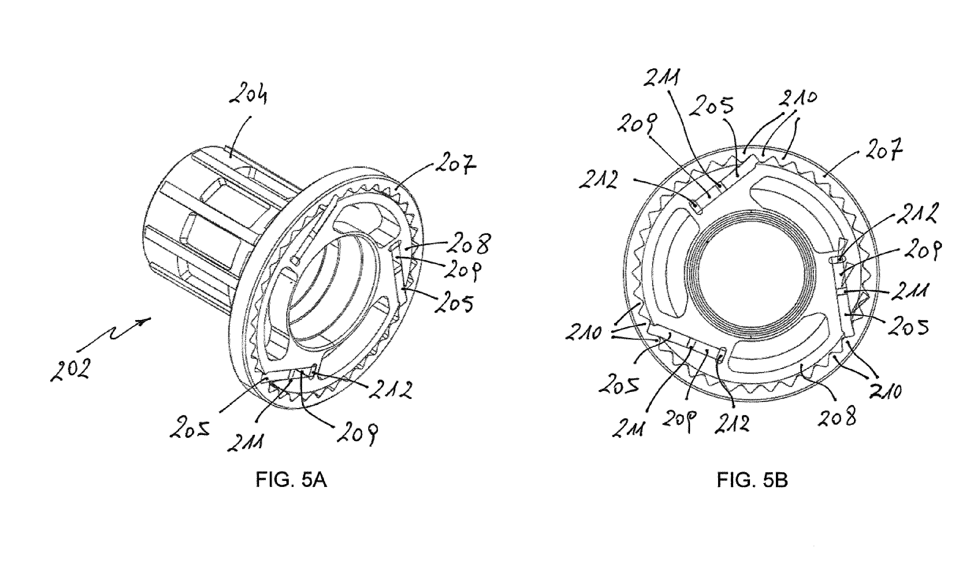

Figures 4, 4A, 5A and 5B illustrate, by way of example, a second embodiment of a hub for bicycle wheels according to the present invention, wherein the freewheel body 202 is provided, peripherally on the disk 208, with suitable rectilinear seats 209 in each of which is accommodated a coupling element 205 capable of sliding along said seat 209 against thrust means 206.

The coupling elements 205 consist of small blocks essentially in an elongate parallelepiped shape and are adapted to engage the teeth of a crown gear 207 integral with the central body 203. The teeth 210 of the crown gear 207 are configured in the shape of isosceles triangles so as to form an angle of about 90° between two adjacent teeth. The longitudinal axis of the seats 209 is inclined with respect to the teeth of the crown gear 207, so that the surface of the head of a coupling element 205 can abut against the surface of one of the inclined sides of the engaged tooth 210, and a lateral portion of the coupling element 205 adjacent to the surface of the head can rest against the inclined side of the tooth adjacent to the engaged tooth, as shown for example in fig. 5B.

The thrust means 206 have the function of maintaining the coupling elements 205 in contact with the teeth 210 of the crown gear 207, and may consist of a pair of permanent magnets for each coupling element 205. Each pair of magnets includes a first magnet 211 associated with the respective coupling element 205 on the side opposite the crown gear 207 and a second magnet 212 associated with the freewheel body 202 at the bottom of the rectilinear seat 209 within which said coupling element 205 is slidably accommodated, as shown in figures 4 and 4A.

The first and the second magnet 211, 212 are arranged so that the poles having the same polarity face each other so as to create a magnetic repulsion force between the coupling element 205 and the seat 209 such as to push the coupling element 205 into engagement with the crown gear 207, when there is power transmission and thus the freewheel body 202, rotating clockwise with reference to figure 5B, imparts the rotation to the central body 3.

Vice versa, when the pedal stroke is interrupted and thus there is no transfer of power, the freewheel body 202 remains still and the central body 203 can rotate freely in the idle mode due to the triangular configuration of the teeth 210, which cause a reciprocating sliding motion along the respective seat 209 to each of the coupling elements 205 to counter the repulsion force exerted by the pair of magnets 111, 112; in this manner, the coupling elements 205 are induced to climb over the teeth of the crown gear 207, allowing the central body 203, and thus also the driving wheel, which is integral with the central body 203, to continue to rotate in the idle mode with respect to the freewheel 202 in the direction of travel of the bicycle.

Along with the advantages indicated above with reference to the first embodiment, it is evident how the particular configuration and arrangement of the teeth 210 and of the seats 209 of this second embodiment makes it possible to subject the coupling elements 205 to a shear force and no longer a compression force during the power transmission phase, that is, when the coupling elements 205 are engaged with a respective tooth 210 and the freewheel body 202 rotates as one with the central body 203.

In addition, the change from an oscillatory motion to a translational movement of the coupling elements 205, together with the particular configuration of the teeth 210, makes it possible to considerably reduce the angle of engagement between two adjacent teeth, thus reducing the idle rotation play of the freewheel body 202 before the coupling elements 205 come into engagement with a tooth 210, that is when the pedal rotation is restarted. This makes it possible to obtain a greater reactivity of the pedal stroke and to improve the performance of the bicycle.

A further advantage of the second embodiment is the fact that the coupling elements 205 are subjected to shear forces during the power transmission and not to an axial abutment load, as in the first embodiment; this makes it possible to considerably increase the reliability and the life of the same coupling elements.

Naturally, the materials and equipment used to implement the present invention, as well as the shapes and dimensions of the individual components, may be the most suitable for the specific requirements.

## Claims

1. A hub for bicycle wheels comprising a free-wheel body (102; 202) adapted to be coupled to a central body (3; 203) by means of a coupling device comprising at least one coupling member (105; 205) associated to said free-wheel body (102; 202) and engageable with a respective tooth (110; 210) of a crown gear (107; 207) integral with said central body (3; 203), thrust means (106; 206) being provided to maintain said coupling member (105; 205) engaged with said tooth (110; 210), **characterized in that** said thrust means (106; 206) essentially consist of a pair of permanent magnets (111, 112; 211, 212) respectively associated to said coupling member (105; 205) and to said free-wheel body (102; 202), said permanent magnets (111, 112; 211, 212) being arranged such that respective poles having the same polarity are mutually facing.

2. A hub as in claim 1, wherein a rotary motion imparted to said free-wheel body (102; 202) is transferred to said central body (3; 203) through the engagement of said at least one coupling member (105; 205) with said respective tooth (110; 210), while in absence of any rotary motion imparted to said free-wheel body (102; 202), said central body (3; 203) is allowed continuing to rotate relative to said free-wheel body (102; 202) through the push exerted by said teeth (110; 210) on said at least one coupling member (105; 205), said push imparting a reciprocating motion to said at least one coupling member (105; 205) against the action of a magnetic repulsive force generated by said pair of permanent magnets (111, 112; 211, 212), said reciprocating motion causing the disengagement of said at least one coupling member (105; 205) from said teeth (110; 210).

3. A hub as in claim 1, wherein said pair of permanent magnets (111, 112; 211, 212) comprises a first magnet (111; 211) and a second magnet (112; 212) arranged mutually spaced and substantially parallel when said coupling member (105; 205) is engaging said respective tooth (110; 210).

4. A hub as any of preceding claims, wherein said free-wheel body (102; 202) comprises a disc (108; 208), said coupling member (105; 205) being accommodated in a seat (109; 209) peripherally provided on said disc (108; 208).

5. A hub as in claim 4, wherein said coupling member (105) is pivoted to said seat (109), said reciprocating motion being an oscillatory motion of said coupling member (105) relative to said seat (109).

6. A hub as in claim 5, wherein said seat (109) is provided with a portion (113) substantially parallel to the respective coupling member (105) when said coupling member (105) is engaging said respective tooth (110).

7. A hub as in claims 5 or 6, wherein the teeth (110) of said crown gear (107) are saw-toothed shaped.

8. A hub as in claim 4, wherein said seat (209) extends essentially rectilinearly along an axis inclined relative to the teeth (210) of said crown gear (207), said at least one coupling member (205) being slidably accommodated into said seat (209), said reciprocating motion being a rectilinear translational motion along said seat (209).

9. A hub as in claim 8, wherein said first magnet (211) is associated to said coupling member (205) opposite said crown gear (207) and said second magnet (212) is associated at the bottom of said rectilinear seat (209).

10. A hub as in claims 8 or 9, wherein each tooth (210) of said crown gear (207) is shaped as an isosceles triangle.
